Europäisches Patentamt

European Patent Office

Office européen des brevets

(11) Publication number: **0 239 551**
**A1**

## (12) EUROPEAN PATENT APPLICATION

(21) Application number: **87850004.0**

(22) Date of filing: **09.01.87**

(51) Int. Cl.⁴: **F 16 D 1/08**

(30) Priority: **26.02.86 SE 8600861**

(43) Date of publication of application:
**30.09.87 Bulletin 87/40**

(84) Designated Contracting States:
**CH DE FR GB IT LI SE**

(71) Applicant: **FFV Transmission Aktiebolag**
**S-580 13 Linköping (SE)**

(72) Inventor: **Disborg, Lennart**
**c/o FFV Transmission AB**
**S-580 13 Linköping (SE)**

(74) Representative: **Avellan-Hultman, Olle**
**Avellan-Hultman Patentbyra AB P.O. Box 5366**
**S-102 46 Stockholm 5 (SE)**

(54) Friction joint of cone coupling type.

(57) Friction joint of cone coupling type for interconnecting a shaft (1) and a hub (2) or a corresponding machine part for enabling a torque transmission and/or axial force transmission therebetween and comprising an inner cone means (3) and an outer cone means (4) which may eventually be slotted for enabling an extended compression and expansion thereof respectively, a clamp means (5) and one or more clamp screws (7) for cooperation with said clamp means (5) in order to move the inner and outer cone means together and to radially compress and expand same respectively, and in which both the inner cone means (3) and the outer cone means (4) are formed with axially extending open and substantially U-shaped grooves (10, 11) for through extending clamp screws (7). The cone means may be one or more cooperating outer cones (4) and one of more cooperating inner cones (3). The joint may also include two cooperating cone couplings which are kept on a predetermined distance from each other. The clamp means may be an ordinary clamp ring having threaded bores (12), or it may be threaded bores in a flange like part of the hub.

Fig. 1

## Description

Friction joint of cone coupling type.

The present invention generally relates to a friction joint of cone coupling type intended for interconnecting a shaft and a hub or any other type of rotatably and/or axially movable machine parts.

Many different types of friction joints of cone coupling type intended for connecting of a shaft to a hub or a similar means are known. In common for such cone coupling joints is the fact that they comprise two cone parts which can be pulled together by a screw means, whereby said cones slide over each other so that one of the cones is compressed radially and the other cone is expanded radially. A usual complication in such cone couplings is to provide the screw means so that it does not disturb the pulling together of the cones and so that the threads of the screw means can be made without a substantial amount of work and preferably without the need of working the very cones which are often made of a hard or quenched material. Most preferably it is wanted to use different kinds of standard elements which can be used for different types and different dimensions of the cone couplings.

The US patent 2,691,541 is an example of a known cone coupling having an outer cone and an inner cone and in which one of the cone parts is formed with a through bore for free introduction of a number of pulling screws and the other cone part is formed with corresponding threaded bores for said pulling screws.

The US patent 3,849,015 is an example of a known cone coupling having two outer cones and an intermediate double cone and in which both one of the outer cones and the intermediate double cone are formed with axial through bores for pulling screws and the other outer cone is formed with threaded bores for the pulling screws.

The German patent 883.986 is a further example of a known type of cone coupling in which the very hub is used as one of the cone coupling parts in that the hub is formed with a cone, and in which the movable cone, as conventional, is formed with through bores for the pulling screws, and in which threaded bores are provided in the hub for said pulling screws.

In all said known cases the two cones or the corresponding parts have been formed with bores or threaded bores. This is an expensive and complicated work, especially in the case that the cones of the cone parts are made of a hard or quenched material. In some cases it may be necessary to dequench the material for making it possible to drill and thread the bores. In said types of cone couplings the differences in diameter between the through screw bores and the screw stem define the possibility of movement between the cones, and there are relatively restricted possibilities of adapting the coupling to different large shafts and hub holes.

The present invention relates to a cone coupling of the initially mentioned type comprising an inner cone and an outer cone and several pulling screws and a clamp ring means for cooperation with the pulling screws at one end of the cone coupling, and preferably also a holder ring for the screw heads at the opposite end of the cone coupling. The main characteristics of the invention is that at least one of the inner cone or the outer cone or preferably both cones are formed with axially extending, radially outwards or inwards opening, substantially semi-cylindrical or U-shaped screw bores which give the two cones a possibility of moving to a substantial extent in relation to each other. The invention also involves the advantage that the cones can be made completely finished by being pressed, molded or made in any other way to the intended shape and with the radially open and axially extending through screw bores. Rather than threading one of the cones the invention utilizes standardized clamp rings having threaded bores for pulling the cones together and with which the pulling screws cooperate engagingly when clamping the coupling together. In this embodiment of the invention the cones can move axially and, above all, radially a distance which is substantially larger than in the above mentioned known couplings, and therefore the coupling according to the invention has a greater possibility of being adapted to different large shafts and hubs. At the same time it is possible to reduce the number of cones and clamp rings kept in stock to certain predetermined standard dimensions.

Now the invention is to be described more closely in connection to the accompanying drawings which show several embodiments of the invention. It is, however, to be understood that the described and shown embodiments of the invention are only illustrating examples and that many different modifications and variations may be presented within the scope of the appended claims.

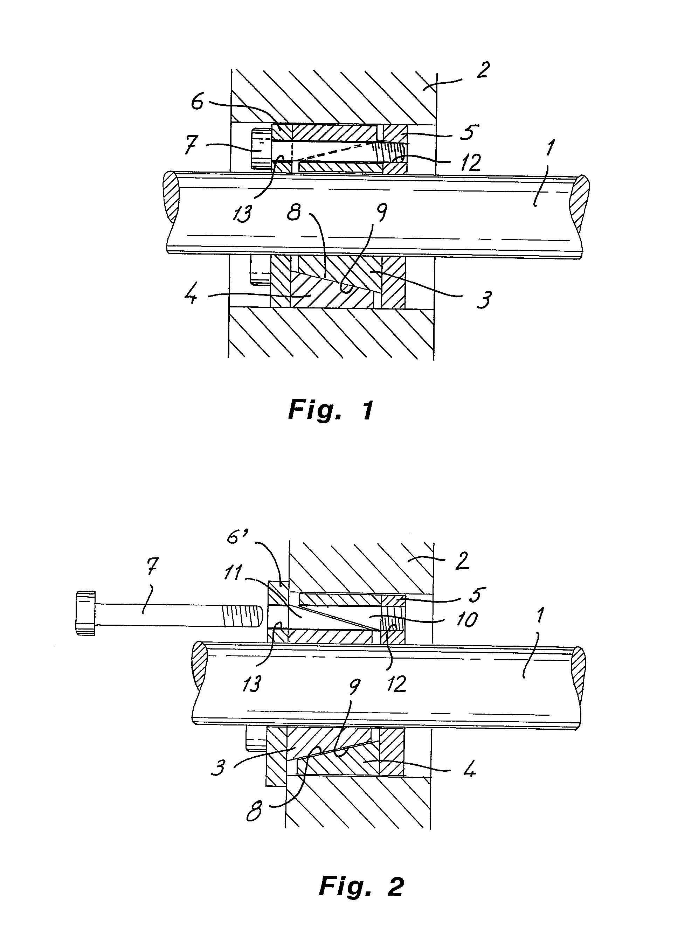

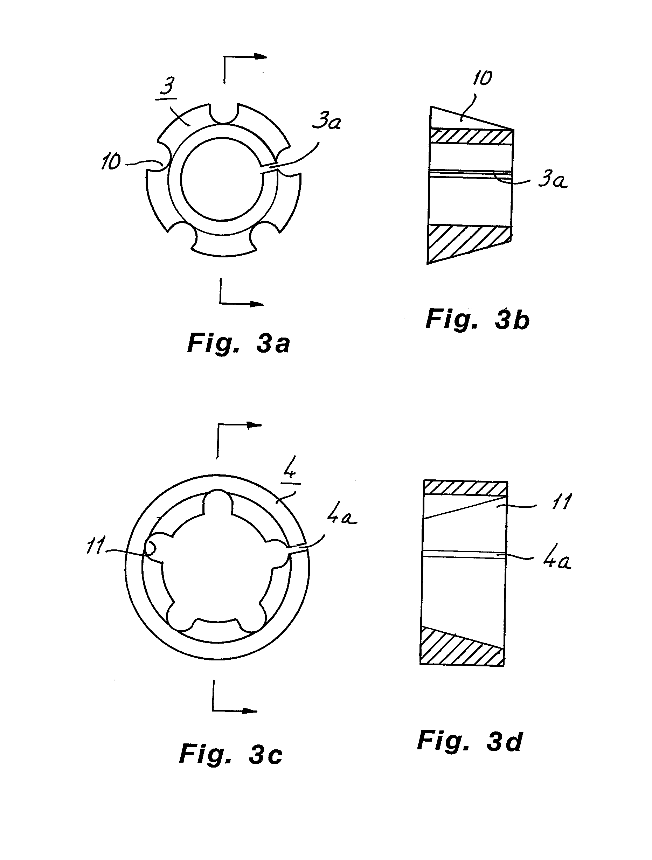

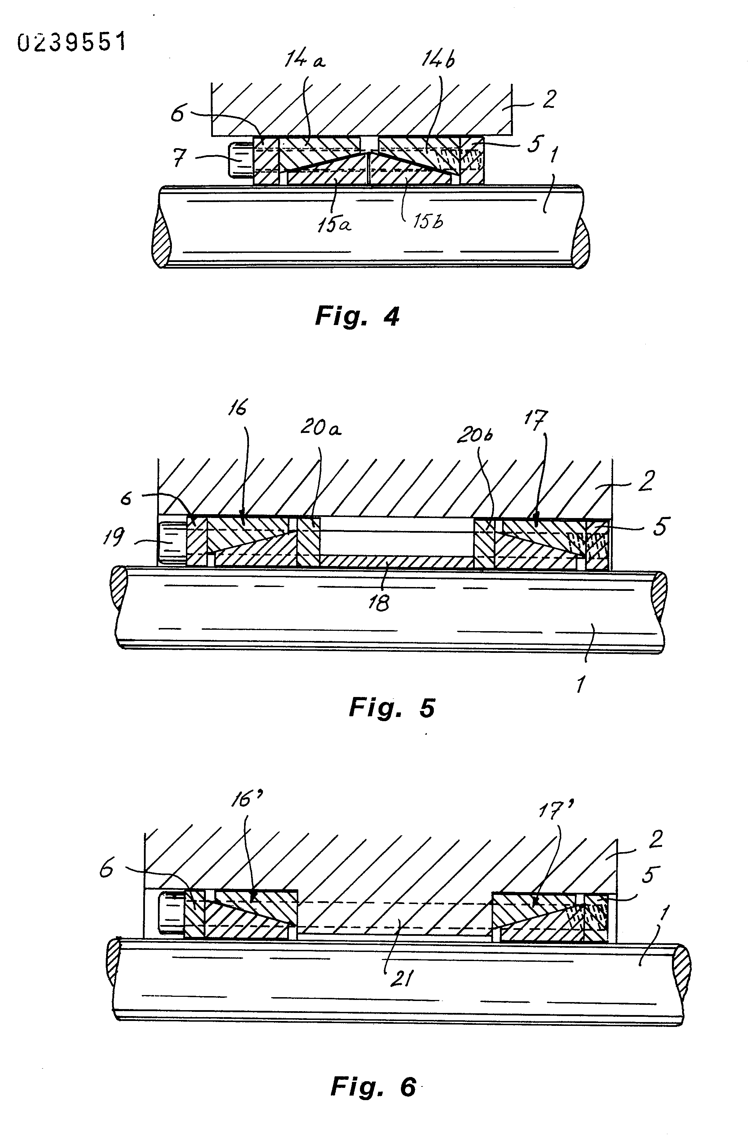

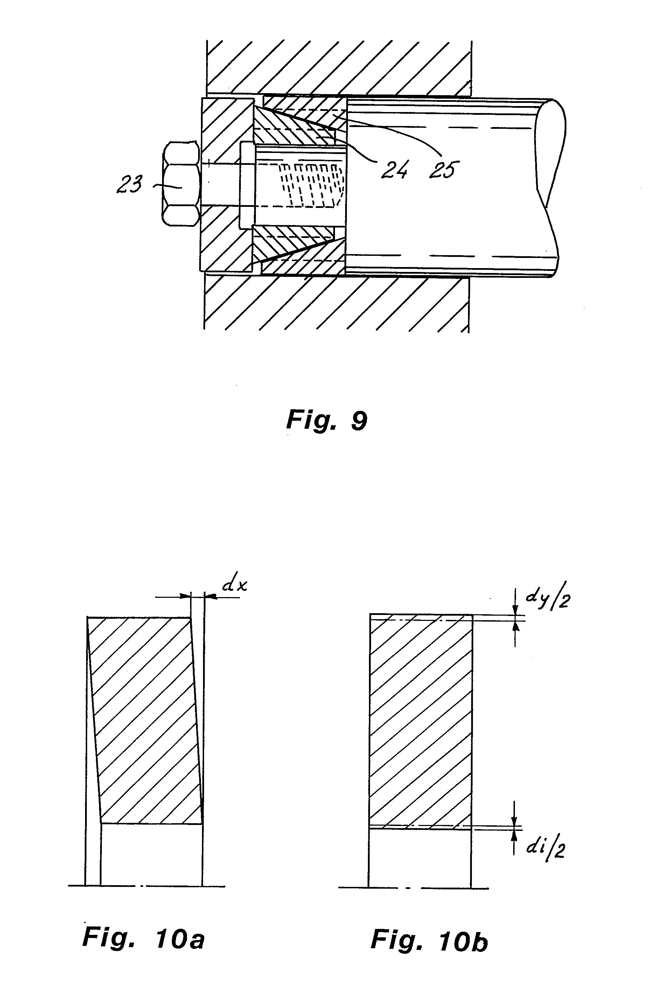

In the drawings figure 1 shows an axial cross section through a first embodiment of a cone coupling according to the invention. Figure 2 similarly shows a second embodiment of the cone coupling. Figures 3a and 3b show a radial view and an axial cross section respectively of the inner cone of figures 1 and 2, and figures 3c and 3d similarly show a view and a cross section of the outer cone of figures 1 and 2. Figures 4-9 show further embodiments of cone couplings according to the invention, and figures 10a and 10b show an embodiment of a holder ring of a special type in non-mounted and mounted state respectively.

The friction joint according to the invention is intended for use in connecting a shaft or a bar to any part or parts which is/are rotatable or axially movable in relation thereto. The most usual case is the rotatably axially locked interconnection between a shaft and a hub, and this case is illustrated in the drawings as one of many possible applications.

The friction joint of figure 1 is intended for rotatable connection of a shaft 1 to a fragmentarily shown hub 2. The cone coupling joint comprises an inner cone 3 and an outer cone 4 and a clamp ring 5 having threaded bores, a holder ring 6 having through bores and several clamp screws 7.

The cone surfaces 8 and 9 of the inner cone and the outer cone are, as usual, fitted to each other, and the cone angle is calculated with refrence to the desired clamping force. Both the inner cone and the outer cone can be formed with an axial through slot 3a and 4a resp. for facilitating the compression of the inner cone and the expansion of the outer cone.

It is especially characterizing to the invention that the inner cone 3 is formed with radially outwards facing, U-shaped open screw grooves 10, and that the outer cone is formed with correspondingly shaped radially inwards facing, U-shaped screw grooves 11. The clamp ring 5 is formed with several threaded screw bores 12 having the saem mutual distribution as the screw grooves 10 and 11, and the holder ring 6 is formed with analogously placed screw bores 13. The clamp ring 5 and the holder ring 6 preferably are formed with an inner diameter and an outer diameter corresponding to the outer diameter of the shaft 1 and the diameter of the hub bore respectively so that said rings provide a good guide for the clamp screws 7. It is not absolutely necessary to use the holder ring 6. The heads of the screws may directly contact the end surface of the outer cone 4, but the holder ring is preferably used to give the screws a good guidance and to distribute the forces evenly, and thereby to reduce the stress concentrations at the screws. The number of clamp screws can be varied depending on the circumstances, and the coupling may include be three or more screws evenly distributed round the clamp ring and the holder ring respectively.

The radially open screw grooves 10 and 11 of the cones 3 and 4 preferably can be formed in direct connection to the manufacture, for instance the moulding, the pressing etc. of the cones, and thereby the need of working, for instance drilling and threading, of the ready cones, which in many cases are quenched, has been eliminated. The cones can move a substantially greater distance than is possible with the above mentioned priorily known cone couplings, and thereby it is possible to reduce the assortment of cone couplings. Clamp rings and holder rings can be kept in stock as simple and cheap standard elements.

The couplings of figure 2 differs from the coupling of figure 1 mainly only in that the holder ring 6' has a greater outer diameter than the hub bore, and therefore the holder ring can be used to fix the coupling axially in that the holder ring is contacting the edge surface of the hub.

The coupling of figure 4 is of double cone type and comprises two opposite outer cones 14a and 14b and two intermediate inner cones 15a and 15b which are in contact with each other. Like the previously described embodiments both the outer cones and the inner cones are formed with radially open screw grooves, and the clamp means also in this case is is a clamp ring 5 and a holder ring 6. This type of cone coupling is useful for hubs having a relatively large axial length.

The embodiment of figure 5 is useful for very long hubs, and it is formed with two separate cone couplings of the type shown in figure 1, the coupling 16 and the coupling 17, and an intermediate distance sleeve 18, which maintains the couplings 16 and 17 on a suitable distance from each other. The coupling arrangement preferably is formed with long screws 19 which actuate both couplings 16 and 17 at the same time in cooperation with the clamp ring 5 and the holder ring 6. For stabilizing the joint two inner holder rings 20a and 20b resp. are preferably provided between the distance sleeve 18 and the two inner cones of the couplings 16 and 17.

Figure 6 shows a coupling similar to that of figure 5, but in this latter case the distance sleeve has been excluded, and the hub is here formed with an inner central and radially inwards extending flange 21 which acts as a stop for the two couplings 16' and 17'. An all around extending flange must be formed with through bores or with radially inwards facing open screw grooves. In a split flange the flange parts preferably are placed so that the screws 19 can pass freely between said flange parts.

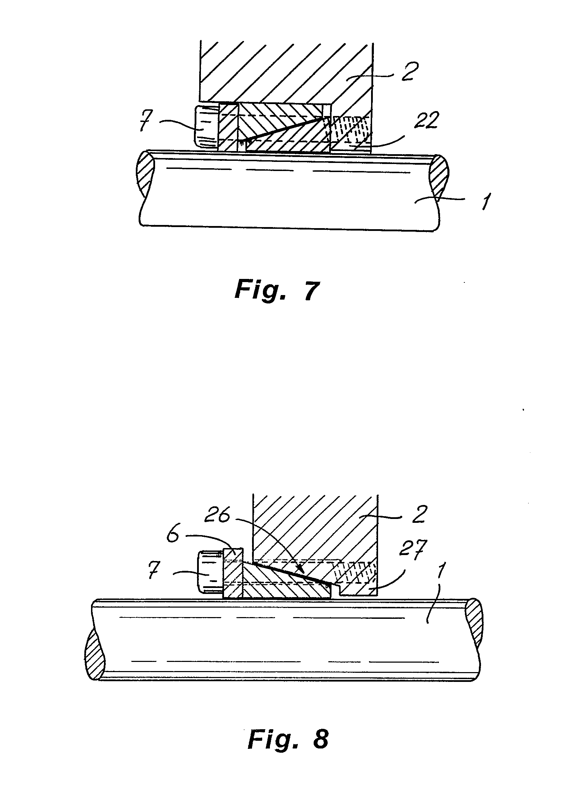

In the embodiment according to figure 7 the clamp ring has been excluded and has been substituted by a radial flange 22 at one end of the hub. The flange is formed with threaded bores for the clamp screws 7.

In the embodiment according to figure 8 the outer cone has been substituted by a conically formed part 26 of the hub. At the coarse end of the outer cone part 26 of the hub there is a little flange 27 which is formed with threaded bores for the clamp screws 7.

The embodiment of figure 9 is adapted to shaft ends and for this purpose the shaft end is turned down over a length corresonding to a part of the hub length. In this case it is possible to alternatively use a central clamp screw 23 as shown in the drawing or several clamp screws distributed on a common circle and extending through the cones 24 and 25 and as far as to threaded bores at the end of the turned down part of the shaft end.

Figure 10 shows a holder ring of special type, in figure 10a in its non-mounted state and in figure 10b in its mounted state. In this case the holder ring also acts as a kind of locking ring and is formed as a spring washer having a certain obliqueness dx. In its mounted condition the said washer is, under clamp actuation, adjusted to a straight position at the same time as the outer diameter is slightly increased dy and the inner diameter is slightly reduced di. The invention offers the advantage of a better centering of the hub in relation to the shaft with maintained possibility of easy introduction of the washer or the holder ring on the shaft and into the hub bore. It is very well possible to make use of the combination of an ordinary straight holder ring of the type shown in figure 1 and a spring washer of the type shown in figure 10, and it is also possible to use a threaded clamp ring of the same type as the spring washer of figure 10.

Reference numerals

Figures 1-3
1 shaft
2 hub
3 inner cone

4 outer cone
5 clamp ring
6 holder ring
7 clamp screws
8 cone surface (of 3)
9 cone surface (of 4)
10 screw groove (of 3)
11 screw groove (of 4)
12 threaded bore (of 5)
13 bore (of 6)

Figure 4
   14a outer cone
14b outer cone
15a cone
15b cone

Figure 5
   16 coupling (first)
17 coupling (second)
18 distance sleeve
19 screws
20a holder ring
20b holder ring

Figure 6
   21 flange

Figure 7
   22 flange

Figure 9
   23 central screw
24 inner cone
25 outercone

Figure 8
   26 cone-formed hub part
27 flange part

Figure 10
   dx axial obliqueness
dy increased outer diameter
di reduced inner diameter

**Claims**

1. Friction joint of cone coupling type for interconnecting a shaft (1) and a hub (2) or a corresponding machine part for enabling a torque transmission and/or axial force transmission therebetween and comprising an inner cone (3; 15a, 15b; 24) and an outer cone (4; 14a, 14b; 25) both of which may eventually be slotted for enable a compression and an expansion thereof respectively, a clamp means (5; 22; 27) and one or more clamp screws (7; 23) for cooperation with said clamp means (5; 22; 27) in order to move the inner and outer cones together and to radially compress and expand same respectively,
**characterized** in that both the inner cone (3; 15; 24) and the outer cone (4; 14; 25) are formed with axially extending open and substantially U-shaped grooves (10, 11) for through extending clamp screws (7; 23).

2. Friction joint according to claim 1, **characterized** in that the clamp means is a clamp ring (5) having threaded screw bores (12) for the clamp screws (7) in contact with one of the cones (3) and preferably a holder ring (6) having bores (13) and being in contact with the other cone (4).

3. Friction joint according to claim 2, **characterized** in that the holder ring (6') has substantially the same inner diameter as the shaft (1) but a greater outer diameter than the hub bore, thereby providing an axial shoulder for the friction joint in contact with the hub (2). (Figure 2)

4. Friction joint according to claim 1, **characterized** in that the clamp means comprises a flange part (22; 27) of the hub (2) having threaded bores. (Figures 7 and 8)

5. Friction joint according to claim 1, **characterized** in that the shaft is turned down at the end thereof so as to provide a space for the cone coupling means, and in that the clamp means comprises several threaded bores for the clamp screws provided in the end surface of the turned down shaft part, or a central threaded bore for one single clamp screw (23). (Figure 9)

6. Friction joint according to claim 1, **characterized** in that it comprises two opposite outer cones (14a, 14b) and two opposite inner cones (15a, 15b), and in that the clamp means comprises a clamp ring (5) having threaded bores (12) provided at the end of one of the outer cones (14b) and a holder ring (6) having a through bore and provided at the end of the other outer cone (14a). (Figure 4)

7. Friction joint according to claim 1, **characterized** in that it comprises two cooperating cones coupling joint parts (16, 17; 16', 17') which are kept on a axial distance from each other by a distance sleeve (18) or a central inner flange (21) in the hub bore. (Figures 5 and 6)

8. Friction joint according to claim 4, **characterized** in that the outer cone (26) is provided in the material of the hub, and in that the hub bore is formed with a flange part (27) in which the clamp screws (7) engage. (Figure 8)

9. Friction joint according to claim 2, **characterized** in that the holder ring and possibly also the clamp ring are formed as a spring washer having a slight obliqueness (dx), which when placed straightly in connection to the clamping of the clamp screws (7) gets a slightly increased outer diameter (dy) and a slightly reduced inner diameter (di) thereby giving the hub an improved centering in relation to the shaft. (Figure 10)

0239551

Fig. 1

Fig. 2

0239551

**Fig. 3a**

**Fig. 3b**

**Fig. 3c**

**Fig. 3d**

0239551

**Fig. 4**

**Fig. 5**

**Fig. 6**

**Fig. 7**

**Fig. 8**

0239551

**Fig. 9**

**Fig. 10a**

**Fig. 10b**

European Patent
Office

**EUROPEAN SEARCH REPORT**

Application number

EP 87 85 0004

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-B-1 206 668 (PETER)  *Columns 2-4; figures 5-8 * | 1,2,5-7 | F 16 D    1/08 |
| X | GB-A-2 034 861 (STRATIENKO)  * Page 5; figures 8-12 * | 1,2,5 | |
| Y | | 3,6,7,9 | |
| Y | FR-A-2 514 443 (DEJOUX)  * Page 3; figures 7-9 * | 3,6,7 | |
| Y | US-A-3 638 974 (STRATIENKO)  * Whole document * | 9 | |
| | | | TECHNICAL FIELDS SEARCHED (Int. Cl.4) |
| X | US-A-4 053 244 (DIVELY)  * Whole document * | 1,4,8 | F 16 D    1/00 |
| X | US-A-2 452 458 (HAHN)  * Whole document * | 1 | |
| X | GB-A- 512 568 (GARTY)  * Whole document * | 1 | |
| X | DE-A-2 243 172 (PETER)  * Whole document * | 1 | |
| | --- -/- | | |

The present search report has been drawn up for all claims

| Place of search | Date of completion of the search | Examiner |
|---|---|---|
| THE HAGUE | 14-05-1987 | BALDWIN D.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| A | DE-A-1 963 480 (PETER)<br>* Whole document * | 5 . | |
| A | US-A-1 393 064 (WOODWARD) | | |
| A,D | DE-C- 883 986 (DODGE MANUFACTURING) | | |
| A,D | US-A-2 691 541 (BENEDEK) | | |
| A,D | US-A-3 849 015 (PETER) | | |

TECHNICAL FIELDS
SEARCHED (Int. Cl.4)

The present search report has been drawn up for all claims

| Place of search | Date of completion of the search | Examiner |
|---|---|---|
| THE HAGUE | 14-05-1987 | BALDWIN D.R. |